# EUROPEAN PATENT APPLICATION

(11) **EP 2 421 222 A1**
(43) Date of publication of application: **22.02.2012**
(21) Application number: 11172185.8
(22) Date of filing: 30.06.2011
(51) Int. Cl.: H04L 29/06

(54) **Communication Device, Information Processing System, and Encryption Switching Method**

(30) Priority: 18.08.2010 JP 2010182999
(71) Applicant: Sony Corporation, Tokyo 108-0075 (JP)
(72) Inventor: Fujita, Norihiro, Minato-ku, Tokyo 108-0075 (JP)
(74) Representative: Horner, David Richard

(57) **Abstract**

There is provided a communication device (300) including a change request reception unit (312) for receiving a change request for temporarily changing an encryption type of the communication device (300) transmitted from an information processing device (200), an encryption type change unit (316) for temporarily changing the encryption type of the communication device (300) on the basis of the change request received by the change request reception unit (312), and an authentication information transmission unit (310) for transmitting authentication information for causing the information processing device (200) to authenticate the communication device (300) encrypted in the encryption type temporarily changed by the encryption type change unit (318) to the information processing device (200).

## Description

### BACKGROUND

The present disclosure relates to a communication device, an information processing system, and an encryption switching method.

In the related art, an integrated circuit (IC) card in which an IC capable of recording or calculating information is embedded has been put into practical use. Above all, the IC card, which is also referred to as a smart card, includes a processor within the IC and implements advanced information processing, has recently been widely used in various use applications as a payment means or an individual identification means in everyday life.

The technology development for more advanced security when various services are used with the IC card has also continued in accordance with the extension of use scenes of the IC card. For example, in terms of an encryption type for encrypting data, an advanced encryption standard (AES) type capable of selecting three kinds of key lengths of 128 bits, 192 bits, and 256 bits has started to be adopted by various authorities, in place of a data encryption standard (DES) type as a 64-bit block encryption type widely used in the past.

This applicant has proposed technology capable of removing an additional procedure when an encryption type corresponding to an IC card is switched (for example, see Japanese Patent Application Laid-Open No. 2010-98367).

Incidentally, it is necessary to perform switching to an encryption type having a higher security strength for a reader/writer (R/W), which communicates with an IC card, in accordance with switching to a type having a higher security strength than an encryption type for an IC card.

For example, an R/W system, which is an information processing system mounted at a ticket gate of a station or the like, includes an R/W control device and an R/W. The R/W control device controls the R/W. The R/W is a secure device having an antenna module. The R/W control device and the R/W are communicable with each other after performing mutual authentication.

In the above-described R/W system, it is not preferable to switch the encryption type of the R/W control device and switch the encryption type of the R/W by temporarily stopping the entire system due to a high risk. In a transition period of switching the encryption type, it is necessary for the R/W control device or the R/W to have a communication function and an authentication function in an old encryption type and a communication function or an authentication function in a new encryption type.

For example, after the R/W is first replaced by one corresponding to both the old encryption type and the new encryption type in switching of the encryption type of the R/W system, the R/W control device is replaced by one corresponding to both the old encryption type and the new encryption type. After the R/W control device and the R/W perform the mutual authentication in the old encryption type, the R/W control device switches the encryption type of the R/W from the old encryption type to the new encryption type, and the R/W control device switches its own encryption type from the old encryption type to the new encryption type.

However, because the R/W control device only performs the mutual authentication based on the old encryption type with the R/W in switching of the encryption type of the above-described R/W system, it is necessary for the R/W control device to be replaced by one corresponding to both the old encryption type and the new encryption type. Thus, a developer of the R/W control device has a burden to make the R/W control device corresponding to both the old encryption type and the new encryption type.

### SUMMARY OF THE INVENTION

It is desirable to provide a novel and improved communication device, information processing system, and encryption switching method that can reduce the burden when an encryption type is switched.

According to an embodiment of the present disclosure, there is provided a communication device including a change request reception unit for receiving a change request for temporarily changing an encryption type of the communication device transmitted from an information processing device, an encryption type change unit for temporarily changing the encryption type of the communication device on the basis of the change request received by the change request reception unit, and an authentication information transmission unit for transmitting authentication information for causing the information processing device to authenticate the communication device encrypted in the encryption type temporarily changed by the encryption type change unit to the information processing device.

The communication device may further include an authentication information reception unit for receiving authentication information for causing the communication device to authenticate the information processing device encrypted in the encryption type temporarily changed by the encryption type change unit transmitted from the information processing device, and an authentication unit for authenticating the information processing device on the basis of the authentication information received by the authentication information reception unit.

The communication device may further include a setting request reception unit for receiving a setting request for setting the encryption type of the communication device to the encryption type temporarily changed by the encryption type change unit transmitted from the information processing device, and an encryption type setting unit for setting the encryption type of the communication device to the encryption type temporarily changed by the encryption type change unit on the basis of the setting request received by the setting request reception unit.

If the change request is a change request for temporarily changing the encryption type of the communication device from a first encryption type to a second encryption type having a higher security strength than the first encryption type, the encryption type change unit may temporarily change the encryption type of the communication device from the first encryption type to the second encryption type.

According to an embodiment of the present disclosure, there is provided an information processing system including an information processing device, and a communication device. The information processing device includes a change request transmission unit for transmitting a change request for temporarily changing an encryption type of the communication device to the communication device, an authentication information reception unit for receiving authentication information for causing the information processing device to authenticate the communication device encrypted in the encryption type temporarily changed by the change request transmitted from the communication device, and an authentication unit for authenticating the communication device on the basis of the authentication information received by the authentication information reception unit. The communication device includes a change request reception unit for receiving the change request transmitted from the information processing device, an encryption type change unit for temporarily changing the encryption type of the communication device on the basis of the change request received by the change request reception unit, and an authentication information transmission unit for transmitting the authentication information for causing the information processing device to authenticate the communication device encrypted in the encryption type temporarily changed by the encryption type change unit to the information processing device.

The information processing device may further include an authentication information transmission unit for transmitting the authentication information for causing the communication device to authenticate the information processing device encrypted in the encryption type temporarily changed by the encryption type change unit of the communication device to the communication device. The communication device may further include an authentication information reception unit for receiving the authentication information for causing the communication device to authenticate the information processing device encrypted in the encryption type temporarily changed by the encryption type change unit transmitted from the information processing device, and an authentication unit for authenticating the information processing device on the basis of the authentication information received by the authentication information reception unit.

According to an embodiment of the present disclosure, there is provided an encryption switching method including receiving a change request for temporarily changing an encryption type of a communication device transmitted from an information processing device, temporarily changing the encryption type of the communication device on the basis of the received change request, and transmitting authentication information for causing the information processing device to authenticate the communication device encrypted in the temporarily changed encryption type to the information processing device.

The encryption switching method may further include receiving the authentication information for causing the communication device to authenticate the information processing device encrypted in the temporarily changed encryption type transmitted from the information processing device, and authenticating the information processing device on the basis of the received authentication information.

According to the embodiments of the present disclosure described above, it is possible to reduce the burden when an encryption type is switched.
Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:

FIG. 1 is an illustrative diagram schematically showing a configuration of an information processing system according to a first embodiment of the present disclosure;
FIG. 2 is a block diagram schematically showing functional configurations of an R/W control device and an R/W of FIG. 1;
FIG. 3 is a sequence diagram of encryption switching processing to be executed by the R/W control device and the R/W of FIG. 1;
FIG. 4A is an illustrative diagram illustrating switching of an encryption type of an R/W system;
FIG. 4B is an illustrative diagram illustrating switching of an encryption type of an R/W system;
FIG. 4C is an illustrative diagram illustrating switching of an encryption type of an R/W system;
FIG. 5 is an illustrative diagram schematically showing a configuration of an information processing system according to a second embodiment of the present disclosure;
FIG. 6 is a block diagram schematically showing functional configurations of a camera device and a battery of FIG. 5;
FIG. 7 is a sequence diagram of encryption switching processing to be executed by the camera device and the battery of FIG. 5;
FIG. 8A is an illustrative diagram illustrating switching of an encryption type of a camera system;
FIG. 8B is an illustrative diagram illustrating switching of an encryption type of a camera system; and
FIG. 8C is an illustrative diagram illustrating switching of an encryption type of a camera system.

### DETAILED DESCRIPTION OF THE EMBODIMENT(S)

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Description will be given in the following order.
1. Configuration of Information Processing System (First Embodiment)
2. Functional Configurations of R/W Control Device and R/W
3. Encryption Switching Processing (First Embodiment)
4. Configuration of Information Processing System (Second Embodiment)
5. Functional Configurations of Camera Device and Battery
6. Encryption Switching Processing (Second Embodiment)

### [1. Configuration of Information Processing System (First Embodiment)]

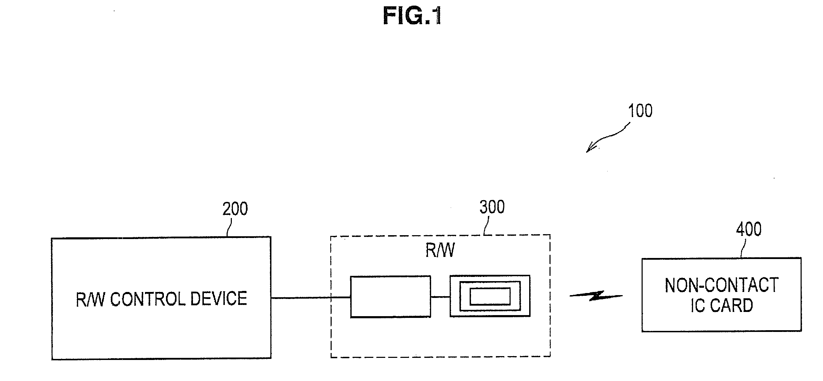

First, the information processing system according to the first embodiment of the present disclosure will be described. FIG. 1 is an illustrative diagram schematically showing the configuration of the information processing system according to this embodiment. Hereinafter, an example in which the information processing system is an R/W system mounted at a ticket gate of a station or the like will be described.

In FIG. 1, an R/W system 100, which is the information processing system, includes an R/W control device 200 and an R/W 300. The R/W control device 200 is an example of the information processing device of the present disclosure, and controls the R/W 300. The R/W 300 is an example of a communication device of the present disclosure, and is a secure device including an antenna module. For example, the R/W 300 is communicable with a non-contact IC card 400 in a non-contact type. The R/W 300 may be communicable with a contact IC card (not shown) in a contact type. Also, the R/W control device 200 and the R/W 300 are communicable with each other after performing mutual authentication.

### [2. Functional Configurations of R/W Control Device and R/W]

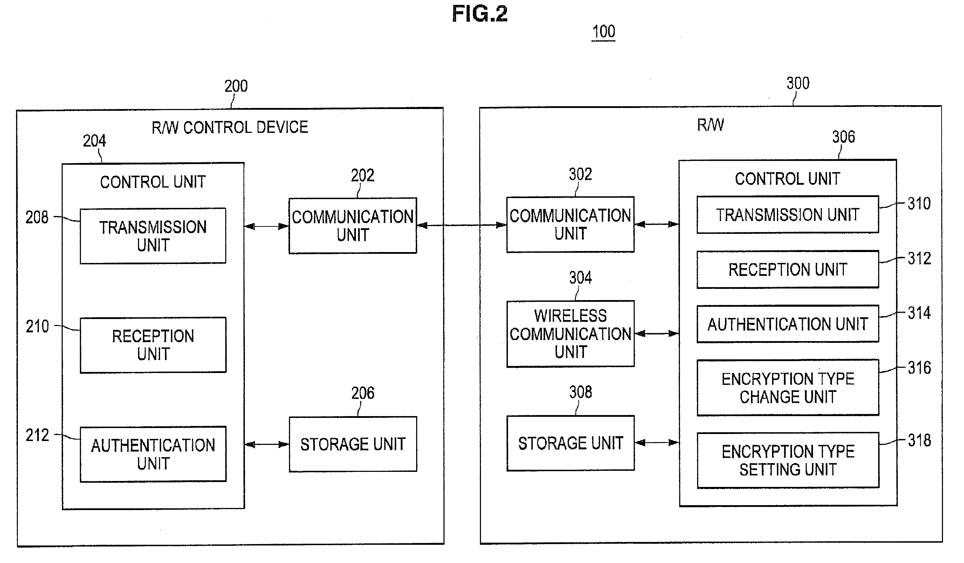

Next, the functional configurations of the R/W control device 200 and the R/W 300 of FIG. 1 will be described. FIG. 2 is a block diagram schematically showing the functional configurations of the R/W control device 200 and the R/W 300 of FIG. 1.

In FIG. 2, the R/W control device 200 includes a communication unit 202, a control unit 204, and a storage unit 206. The control unit 204 includes a transmission unit 208, a reception unit 210, and an authentication unit 212.

The communication unit 202 is communicable with a communication unit 302 of the R/W 300, and exchanges information. The control unit 204 controls the entire R/W control device 200. The storage unit 206 stores an encryption key of the encryption type of the R/W control device 200, or the like.

The transmission unit 208 of the control unit 204 transmits a change request for temporarily changing the encryption type of the R/W 300 to the R/W 300 via the communication unit 202. Also, the transmission unit 208 encrypts authentication information for causing the R/W 300 to authenticate the R/W control device 200 in the encryption type temporarily changed in the R/W 300, and transmits the encrypted authentication information to the R/W 300 via the communication unit 202. The transmission unit 208 transmits a setting request for setting the encryption type of the R/W 300 to the temporarily changed encryption type to the R/W 300 via the communication unit 202.

The reception unit 210 of the control unit 204 receives a response to the change request transmitted by the transmission unit 208 from the R/W 300 via the communication unit 202. Also, the reception unit 210 receives authentication information for causing the R/W control device 200 to authenticate the R/W 300 encrypted in the encryption type temporarily changed in the R/W 300 from the R/W 300 via the communication unit 202. Also, the reception unit 210 receives a response to the setting request transmitted by the transmission unit 208 from the R/W 300 via the communication unit 202.

The authentication unit 212 of the control unit 204 authenticates the R/W 300 on the basis of the authentication information received by the reception unit 210 of the R/W control device 200.

On the other hand, the R/W 300 includes the communication unit 302, a wireless communication unit 304, a control unit 306, and a storage unit 308. The control unit 306 includes a transmission unit 310, a reception unit 312, an authentication unit 314, an encryption type change unit 316, and an encryption type setting unit 318.

The communication unit 302 is communicable with the communication unit 202 of the R/W control device 200, and exchanges information. Also, the communication unit 302 may be communicable with a contact IC card (not shown). The wireless communication unit 304 is communicable with the non-contact IC card 400 in a non-contact type, and exchanges information. The control unit 306 controls the entire R/W 300. The storage unit 308 stores an encryption key of the encryption type of the R/W 300, or the like.

The transmission unit 310 of the control unit 306 is an example of an authentication information transmission unit of the present disclosure, and transmits the response to the change request transmitted by the transmission unit 208 of the R/W control device 200 to the R/W control device 200 via the communication unit 302. Also, the transmission unit 310 encrypts the authentication information for causing the R/W control device 200 to authenticate the R/W 300 in the encryption type temporarily changed in the R/W 300, and transmits the encrypted authentication information to the R/W control device 200 via the communication unit 302. Also, the transmission unit 310 transmits the response to the setting request transmitted by the transmission unit 208 of the R/W control device 200 to the R/W control device 200 via the communication unit 302.

The reception unit 312 of the control unit 306 is an example of a change request reception unit, an authentication information reception unit, and a setting request reception unit of the present disclosure, and receives the change request for temporarily changing the encryption type of the R/W 300 transmitted by the transmission unit 208 of the R/W control device 200 via the communication unit 302. Also, the reception unit 312 receives the authentication information for causing the R/W 300 to authenticate the R/W control device 200 encrypted in the encryption type temporarily changed in the R/W 300 from the R/W control device 200 via the communication unit 302. Also, the reception unit 312 receives the setting request for setting the encryption type of the R/W 300 to the temporarily changed encryption type from the R/W control device 200 via the communication section 302.

The authentication unit 314 of the control unit 306 authenticates the R/W control device 200 on the basis of the authentication information received by the reception unit 312 of the R/W 300.

The encryption type change unit 316 of the control unit 306 temporarily changes the encryption type of the R/W 300 on the basis of a change request received by the reception unit 312 of the R/W 300.

The encryption type setting unit 318 of the control unit 306 sets the encryption type of the R/W 300 to the encryption type temporarily changed by the encryption type change unit 316 on the basis of the setting request received by the reception unit 312 of the R/W 300.

### [3. Encryption Switching Processing (First Embodiment)]

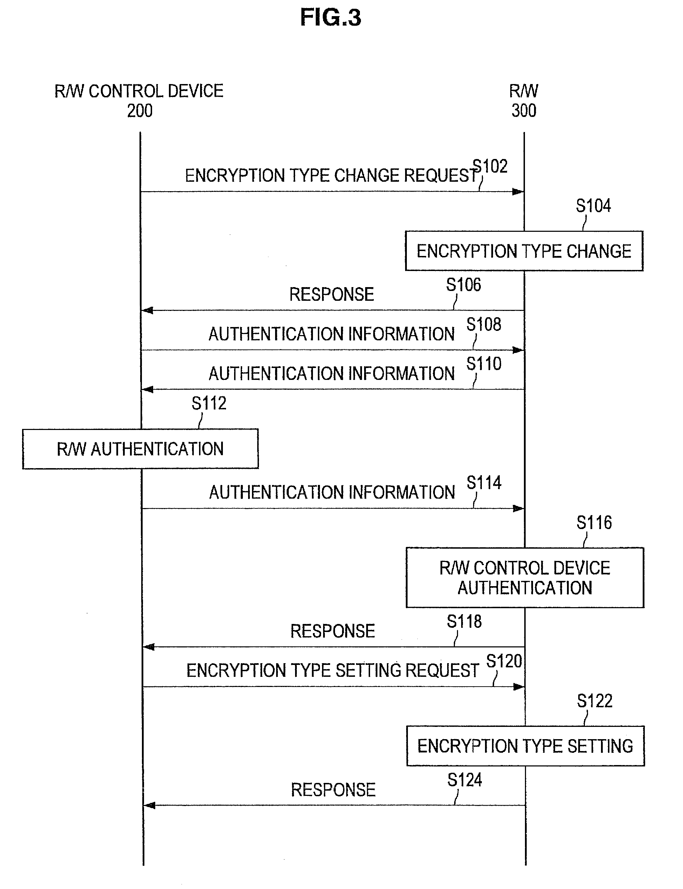

Next, the encryption switching processing to be executed by the R/W control device 200 and the R/W 300 of FIG. 1 will be described. FIG. 3 is a sequence diagram of the encryption switching processing to be executed by the R/W control device 200 and the R/W 300 of FIG. 1.

In FIG. 3, first, the transmission unit 208 of the R/W control device 200 transmits a change request for temporarily changing the encryption type of the R/W 300 from an old encryption type, for example, a DES type, to a new encryption type, for example, an AES type, to the R/W 300 via the communication unit 202 (step S102). For example, in step S102, the transmission unit 208 of the R/W control device 200 transmits the change request to the R/W 300 without encrypting the change request. The DES type is an example of a first encryption type of the present disclosure, and the AES type is an example of a second encryption type of the present disclosure.

Then, the reception unit 312 of the R/W 300 receives the change request for temporarily changing the encryption type of the R/W 300 transmitted in step S102 from the old encryption type to the new encryption type via the communication unit 302, and the encryption type change unit 316 of the R/W 300 temporarily changes the encryption type of the R/W 300 from the old encryption type to the new encryption type on the basis of the change request received by the reception unit 312 of the R/W 300 (step S104).

Then, the transmission unit 310 of the R/W 300 transmits a response to the change request transmitted in step S102 to the R/W control device 200 via the communication unit 302 (step S106).

Then, after the reception unit 210 of the R/W control device 200 receives the response transmitted in step S106, the transmission unit 208 of the R/W control device 200 encrypts the authentication information for causing the R/W 300 to authenticate the R/W control device 200 in the new encryption type temporarily changed in step S 104, and transmits the encrypted authentication information to the R/W 300 via the communication unit 202 (step S108).

Then, the reception unit 312 of the R/W 300 receives the authentication information transmitted in step S108, and the transmission unit 310 of the R/W 300 encrypts the authentication information for causing the R/W control device 200 to authenticate the R/W 300 in the new encryption type temporarily changed in step S104, and transmits the encrypted authentication information to the R/W control device 200 via the communication unit 302 (step S110).

Then, the reception unit 210 of the R/W control device 200 receives the authentication information transmitted in step S110, and the authentication unit 212 of the R/W control device 200 authenticates the R/W 300 on the basis of the authentication information received by the reception unit 210 of the R/W control device 200 (step S112).

Then, the transmission unit 208 of the R/W control device 200 encrypts the authentication information for causing the R/W 300 to authenticate the R/W control device 200 in the new encryption type temporarily changed in step S104, and transmits the encrypted authentication information to the R/W 300 via the communication unit 202 (step S114).

Then, the reception unit 312 of the R/W 300 receives the authentication information transmitted in step S 114, and the authentication unit 314 of the R/W 300 authenticates the R/W control device 200 on the basis of the authentication information received by the reception unit 312 of the R/W 300 (step S116).

Then, the transmission unit 310 of the R/W 300 transmits a response indicating that the authentication of the R/W control device 200 has been completed to the R/W control device 200 via the communication unit 302 (step S118).

Then, the transmission unit 208 of the R/W control device 200 transmits a setting request for setting the encryption type of the R/W 300 to the new encryption type temporarily changed in step S104 to the R/W 300 via the communication unit 202 (step S120).

Then, the reception unit 312 of the R/W 300 receives the setting request transmitted in step S120, and the encryption type setting unit 318 of the R/W 300 sets the encryption type of the R/W 300 to the new encryption type temporarily changed in step S104 on the basis of the setting request received by the reception unit 312 of the R/W 300 (step S122). For example, in step S122, the encryption type setting unit 318 of the R/W 300 sets a parameter of the encryption type stored in the storage unit 308 of the R/W 300 from a parameter of the old encryption type to a parameter of the new encryption type. Thereby, it is possible to permanently set the encryption type of the R/W 300 to the new encryption type.

Then, the transmission unit 310 of the R/W 300 transmits a response to the setting request transmitted in step S120 to the R/W control device 200 via the communication unit 302 (step S124), and the reception unit 210 of the R/W control device 200 terminates this processing after receiving the response transmitted in step S124.

According to the encryption switching processing of FIG. 3, the R/W control device 200 sets the encryption type of the R/W 300 from the old encryption type to the new encryption type after mutual authentication is performed on the basis of the authentication information encrypted in the new encryption type by temporarily changing the encryption type of the R/W 300 from the old encryption type to the new encryption type. Thereby, because it is not necessary for the R/W control device 200 and the R/W 300 to perform the mutual authentication in the old encryption type, it is not necessary to set the R/W control device 200 to one corresponding to both the old encryption type and the new encryption type, and it is possible to reduce the burden of a developer of the R/W control device 200.

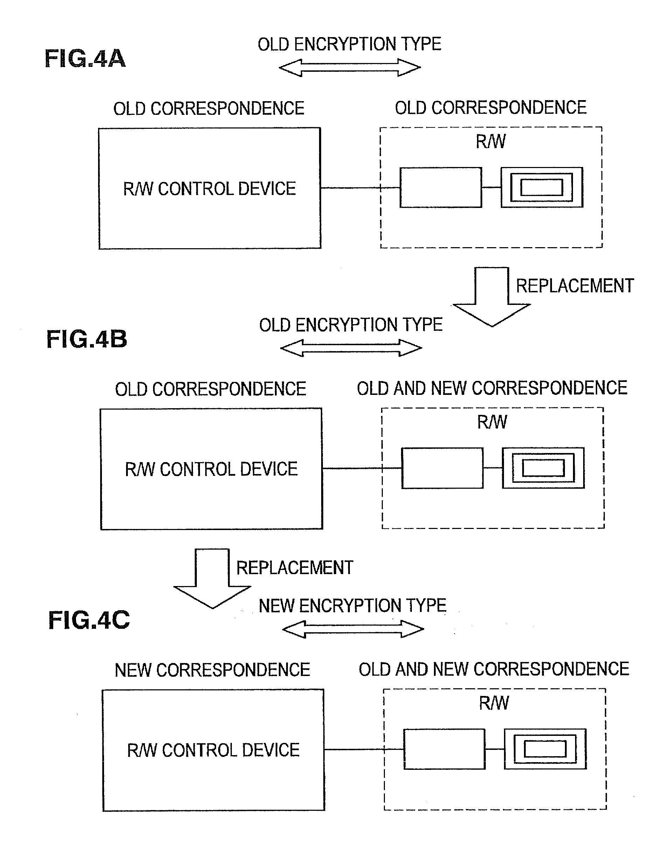

For example, in switching of the encryption type of the R/W system including an old correspondence R/W control device corresponding to the old encryption type and an old correspondence R/W corresponding to the old encryption type as shown in FIG. 4A, the R/W is first replaced by an old and new correspondence R/W corresponding to the new encryption type and the old encryption type as shown in FIG. 4B. As shown in FIG. 4C, the R/W control device is replaced by the new correspondence R/W control device corresponding to the new encryption type. In an R/W system including the new correspondence R/W control device corresponding to the new encryption type and the old and new correspondence R/W corresponding to the new encryption type and the old encryption type shown in FIG. 4C, the switching of the encryption type of the R/W system is completed by executing the encryption switching processing of FIG. 3 described above and switching the encryption type of the R/W from the old encryption type to the new encryption type. Thereby, in switching of the encryption type of the R/W system, it is not necessary to replace the R/W control device with the old and new correspondence R/W control device corresponding to the new encryption type and the old encryption type, and it is possible to reduce the burden of the developer of the R/W control device.

In this embodiment, if the change request received by the reception unit 312 of the R/W 300 is a change request for temporarily changing the encryption type of the R/W 300 from a current encryption type to another encryption type having a higher security strength than the current encryption type, the encryption type change unit 316 of the R/W 300 temporarily changes the encryption type of the R/W 300 from the current encryption type to the other encryption type. Thereby, it is possible to prevent the R/W 300 from being changed to another encryption type having a lower security strength than the current encryption type.

In this embodiment, the transmission unit 208 of the R/W control device 200 can transmit a setting request for returning the encryption type of the R/W 300 from the new encryption type set in step S118 to the original old encryption type to the R/W 300 via the communication unit 202.

### [4. Configuration of Information Processing System (Second Embodiment)]

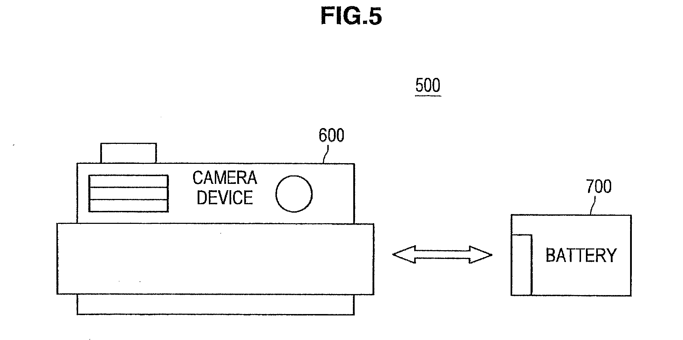

Next, the information processing system according to the second embodiment of the present disclosure will be described. FIG. 5 is an illustrative diagram schematically showing the configuration of the information processing system according to this embodiment. Hereinafter, an example in which the information processing system is a camera system constituted by a camera device and a battery will be described.

In FIG. 5, a camera system 500, which is the information processing system, includes a camera device 600 and a battery 700. The camera device 600 is an example of the information processing device of the present disclosure. The battery 700 is an example of the communication device of the present disclosure. The camera device 600 can acquire power from the battery 700 after the authentication of the battery 700 is performed.

### [5. Functional Configurations of Camera Device and Battery]

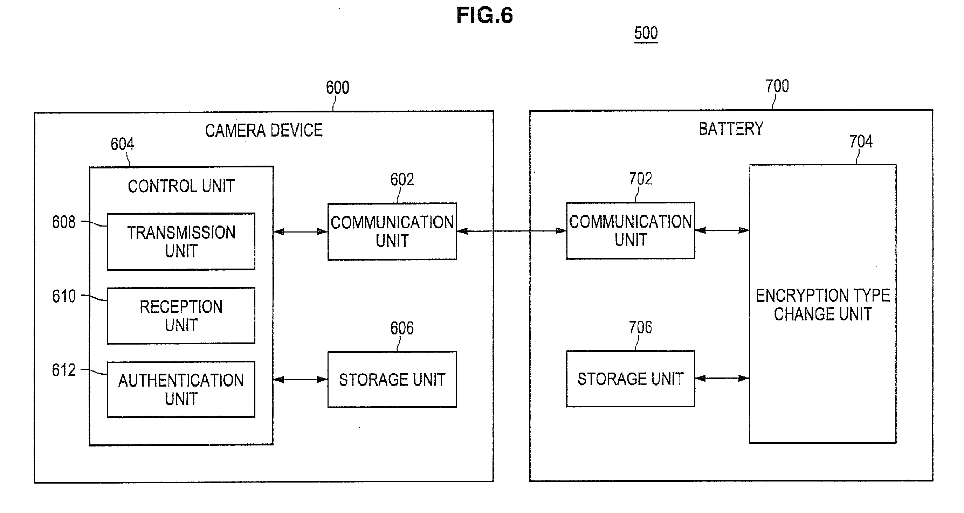

Next, the functional configurations of the camera device 600 and the battery 700 of FIG. 5 will be described. FIG. 6 is a block diagram schematically showing the functional configurations of the camera device 600 and the battery 700 of FIG. 5.

In FIG. 6, the camera device 600 includes a communication unit 602, a control unit 604, and a storage unit 606. The control unit 604 includes a transmission unit 608, a reception unit 610, and an authentication unit 612. The camera device 600 has various functional configurations to function as a camera, but description thereof is omitted because they are not directly related to the present disclosure.

The communication unit 602 is communicable with a communication unit 702 of the battery 700, and exchanges information. The control unit 604 controls the entire camera device 600. The storage unit 606 stores an encryption key of an encryption type of the camera device 600, or the like.

The transmission unit 608 of the control unit 604 transmits a change request for temporarily changing the encryption type of the battery 700 to the battery 700 via the communication unit 602.

The reception unit 610 of the control unit 604 receives a response to the change request transmitted by the transmission unit 608 from the battery 700 via the communication unit 602. Also, the reception unit 610 receives authentication information for causing the camera device 600 to authenticate the battery 700 encrypted in the encryption type temporarily changed in the battery 700 from the battery 700 via the communication unit 602.

The authentication unit 612 of the control unit 604 authenticates the battery 700 on the basis of the authentication information received by the reception unit 610 of the camera device 600.

On the other hand, the battery 700 includes a communication unit 702, an encryption type change unit 704, and a storage unit 706. Also, the battery 700 has various functional configurations to function as a battery, but description thereof is omitted because they are not directly related to the present disclosure.

The communication unit 702 is communicable with the communication unit 602 of the camera device 600, and exchanges information. The encryption type change unit 704 is an example of a change request reception unit and an authentication information transmission unit, and receives the change request for temporarily changing the encryption type of the battery 700 transmitted by the transmission unit 608 of the camera device 600 via the communication unit 702. Also, the encryption type change unit 704 temporarily changes the encryption type of the R/W 300 on the basis of the change request received by the reception unit 312 of the R/W 300. Also, the encryption type change unit 704 transmits a response to the change request transmitted by the transmission unit 608 of the camera device 600 to the camera device 600 via the communication unit 702. Also, the encryption type change unit 704 encrypts the authentication information for causing the camera device 600 to authenticate the battery 700 in the encryption type temporarily changed in the battery 700, and transmits the encrypted authentication information to the camera device 600 via the communication unit 702. The storage unit 706 stores an encryption key of the encryption type of the battery 700, or the like.

### [6. Encryption Switching Processing (Second Embodiment)]

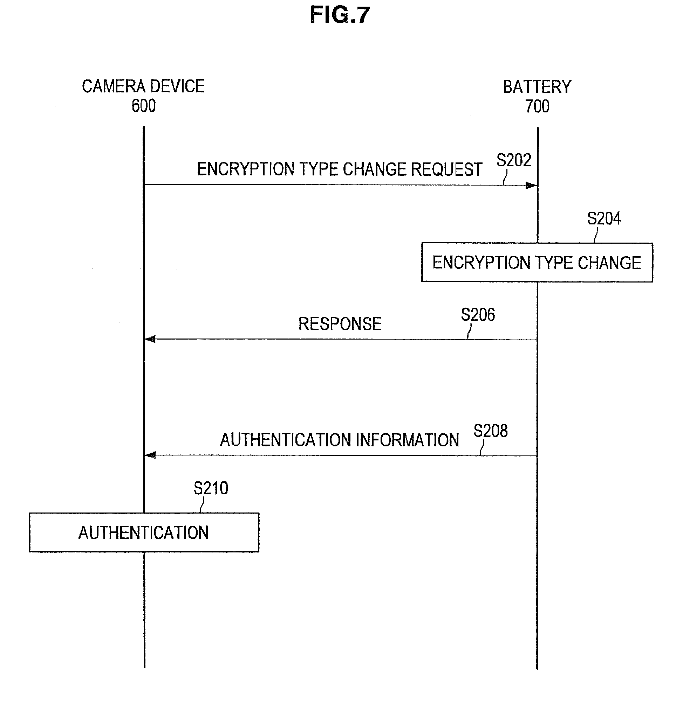

Next, the encryption switching processing to be executed by the camera device 600 and the battery 700 of FIG. 5 will be described. FIG. 7 is a sequence diagram of the encryption switching processing to be executed by the camera device 600 and the battery 700 of FIG. 5.

In FIG. 7, first, the transmission unit 608 of the camera device 600 transmits a change request for temporarily changing the encryption type of the battery 700 from an old encryption type, for example, a DES type, to a new encryption type, for example, an AES type, to the battery 700 via the communication unit 602 (step S202). For example, in step S202, the transmission unit 608 of the camera device 600 transmits the change request to the battery 700 without encrypting the change request. The DES type is an example of a first encryption type of the present disclosure, and the AES type is an example of a second encryption type of the present disclosure.

Then, the encryption type change unit 704 of the battery 700 receives the change request for temporarily changing the encryption type of the battery 700 transmitted in step S202 from the old encryption type to the new encryption type via the communication unit 702, and temporarily changes the encryption type of the battery 700 from the old encryption type to the new encryption type on the basis of the received change request (step S204).

Then, the encryption type change unit 704 of the battery 700 transmits a response to the change request transmitted in step S202 to the camera device 600 via the communication unit 702 (step S206).

Then, after the response is transmitted in step S206, the encryption type change unit 704 of the battery 700 encrypts authentication information for causing the camera device 600 to authenticate the battery 700 in the new encryption type temporarily changed in step S204, and transmits the encrypted authentication information to the camera device 600 via the communication unit 702 (step S208).

Then, the reception unit 610 of the camera device 600 receives the authentication information transmitted in step S208, and the authentication unit 612 of the camera device 600 terminates this processing by authenticating the battery 700 on the basis of the authentication information received by the reception unit 610 of the camera device 600 (step S210).

According to the encryption switching processing of FIG. 7, one-sided authentication is performed on the basis of the authentication information encrypted in the new encryption type by temporarily changing the encryption type of the battery 700 from the old encryption type to the new encryption type. Thereby, it is not necessary to replace the camera device 600 with one corresponding to the old encryption type and the new encryption type because it is not necessary for the camera device 600 to authenticate the battery 700 in the old encryption type, and it is possible to reduce the burden of a developer of the camera device 600.

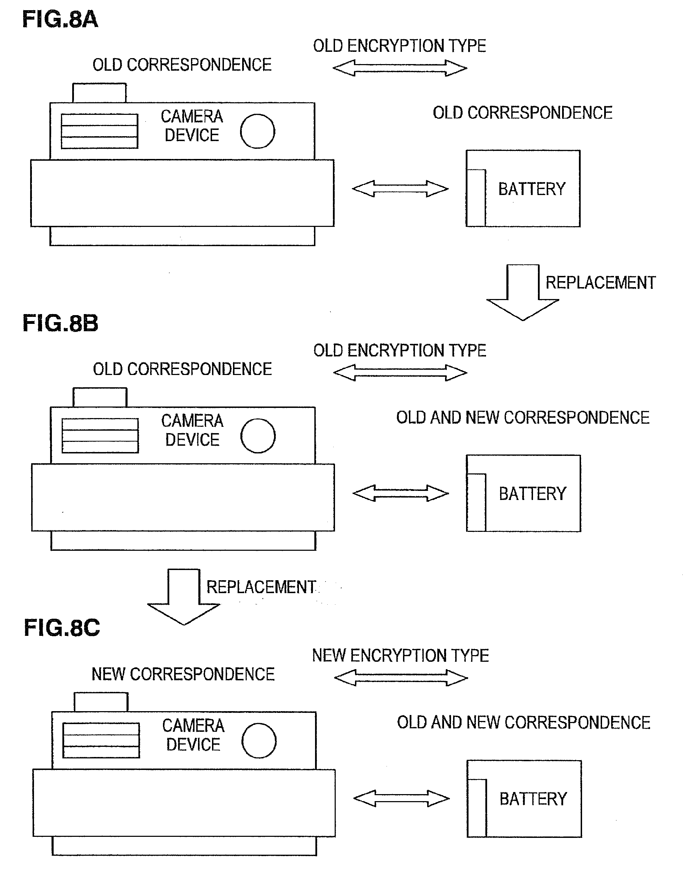

For example, in switching of the encryption type of the camera system including an old correspondence camera device corresponding to the old encryption type and an old correspondence battery corresponding to the old encryption type as shown in FIG. 8A, the battery is first replaced with an old and new correspondence battery corresponding to the new encryption type and the old encryption type as shown in FIG. 8B. As shown in FIG. 8C, the camera device is replaced with a new correspondence camera device corresponding to the new encryption type. In a camera system including the new correspondence camera device corresponding to the new encryption type and the old and new correspondence battery corresponding to the new encryption type and the old encryption type shown in FIG. 8C, the switching of the encryption type of the camera system is completed by executing the encryption switching processing of FIG. 7 described above and switching the encryption type of the battery from the old encryption type to the new encryption type. Thereby, in switching of the encryption type of the camera system, it is not necessary to replace the camera device with the old and new correspondence camera device corresponding to the new encryption type and the old encryption type, and it is possible to reduce the burden of the developer of the camera device. Furthermore, because the new correspondence camera device authenticates the battery in the new encryption type as shown in FIG. 8C, the authentication of the old correspondence battery fails in the new correspondence camera device. Thereby, the use of the old correspondence battery can be inhibited in the new correspondence camera device.

In this embodiment, if the received change request is a change request for temporarily changing the encryption type of the battery 700 from a current encryption type to another encryption type having a higher security strength than the current encryption type, the encryption type change unit 704 of the battery 700 temporarily changes the encryption type of the battery 700 from the current encryption type to the other encryption type. Thereby, it is possible to prevent the battery 700 from being changed to another encryption type having a lower security strength than the current encryption type.

An object of the present disclosure is attained by supplying a storage medium storing the program codes of the software for performing the functions of the above-described embodiments to a system or device, and reading and executing the program codes stored in the storage medium by a computer (or a CPU or MPU) of the system or device.

In this case, the program codes themselves read from the storage medium implement the functions of the above-described embodiments, and the program codes and the storage medium storing the program codes constitute the present disclosure.

As the storage medium for supplying the program codes, for example, a floppy (registered trademark) disk, a hard disk, a magneto-optical disc, an optical disc such as a CD-ROM, CD-R, CD-RW, DVD-ROM, DVD-RAM, DVD-RW, or DVD+RW, a magnetic tape, a nonvolatile memory card, a ROM, and the like may be used. Alternatively, the program codes may be downloaded via a network.

The functions of the above-described embodiments may be implemented not only by executing the program code read by the computer, but also by part or all of actual processing executed by an operating system (OS) or the like running on the computer on the basis of an instruction of the program code.

Furthermore, after the program code read from the storage medium is written to a memory provided in a function extension board inserted into the computer or a function extension unit connected to the computer, its extension function may be executed by part or all of actual processing by a CPU or the like provided in the extension board or the extension unit on the basis of an instruction of the program code, and the functions of the above-described embodiments may be implemented by the processing.

An example in which the present disclosure is applied to an R/W system or a camera system has been described above, but the present disclosure is applicable to any system in which it is necessary to switch an encryption type.
The present disclosure contains subject matter related to that disclosed in Japanese Priority Patent Application JP 2010-182999 filed in the Japan Patent Office on August 18, 2010, the entire content of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A communication device comprising:
a change request reception unit for receiving a change request for temporarily changing an encryption type of the communication device transmitted from an information processing device;
an encryption type change unit for temporarily changing the encryption type of the communication device on the basis of the change request received by the change request reception unit; and
an authentication information transmission unit for transmitting authentication information for causing the information processing device to authenticate the communication device encrypted in the encryption type temporarily changed by the encryption type change unit to the information processing device.

2. The communication device according to claim 1, further comprising:
an authentication information reception unit for receiving authentication information for causing the communication device to authenticate the information processing device encrypted in the encryption type temporarily changed by the encryption type change unit transmitted from the information processing device; and
an authentication unit for authenticating the information processing device on the basis of the authentication information received by the authentication information reception unit.

3. The communication device according to claim 2, further comprising:
a setting request reception unit for receiving a setting request for setting the encryption type of the communication device to the encryption type temporarily changed by the encryption type change unit transmitted from the information processing device; and
an encryption type setting unit for setting the encryption type of the communication device to the encryption type temporarily changed by the encryption type change unit on the basis of the setting request received by the setting request reception unit.

4. The communication device according to claim 1, wherein if the change request is a change request for temporarily changing the encryption type of the communication device from a first encryption type to a second encryption type having a higher security strength than the first encryption type, the encryption type change unit temporarily changes the encryption type of the communication device from the first encryption type to the second encryption type.

5. An information processing system comprising:
an information processing device; and
a communication device,
wherein the information processing device includes:
a change request transmission unit for transmitting a change request for temporarily changing an encryption type of the communication device to the communication device;
an authentication information reception unit for receiving authentication information for causing the information processing device to authenticate the communication device encrypted in the encryption type temporarily changed by the change request transmitted from the communication device; and
an authentication unit for authenticating the communication device on the basis of the authentication information received by the authentication information reception unit, and
wherein the communication device includes:
a change request reception unit for receiving the change request transmitted from the information processing device;
an encryption type change unit for temporarily changing the encryption type of the communication device on the basis of the change request received by the change request reception unit; and
an authentication information transmission unit for transmitting the authentication information for causing the information processing device to authenticate the communication device encrypted in the encryption type temporarily changed by the encryption type change unit to the information processing device.

6. The information processing system according to claim 5, wherein the information processing device further includes an authentication information transmission unit for transmitting the authentication information for causing the communication device to authenticate the information processing device encrypted in the encryption type temporarily changed by the encryption type change unit of the communication device to the communication device, and
wherein the communication device further includes:
an authentication information reception unit for receiving the authentication information for causing the communication device to authenticate the information processing device encrypted in the encryption type temporarily changed by the encryption type change unit transmitted from the information processing device; and
an authentication unit for authenticating the information processing device on the basis of the authentication information received by the authentication information reception unit.

7. An encryption switching method comprising:
receiving a change request for temporarily changing an encryption type of a communication device transmitted from an information processing device;
temporarily changing the encryption type of the communication device on the basis of the received change request; and
transmitting authentication information for causing the information processing device to authenticate the communication device encrypted in the temporarily changed encryption type to the information processing device.

8. The encryption switching method according to claim 7, further comprising:
receiving the authentication information for causing the communication device to authenticate the information processing device encrypted in the temporarily changed encryption type transmitted from the information processing device; and
authenticating the information processing device on the basis of the received authentication information.
